# EUROPEAN PATENT SPECIFICATION

(11) **EP 2 410 323 B1**
(45) Date of publication and mention of the grant of the patent: **05.06.2019**
(21) Application number: 11174649.1
(22) Date of filing: 20.07.2011
(51) Int. Cl.: G01N 27/447

(54) **Sample analysis apparatus and sample analysis method**
Vorrichtung und Verfahren für Probenanalyse
Appareil d'analyse d'échantillons et procédé d'analyse d'échantillons

(30) Priority: 20.07.2010 JP 2010162530
(43) Date of publication of application: 25.01.2012
(73) Proprietor: ARKRAY, Inc., Minami-ku Kyoto-shi Kyoto 601-8045 (JP)
(72) Inventor: Matsumoto, Daisuke, Kyoto-shi, Kyoto 6020008 (JP); Nakayama, Yusuke, Kyoto-shi, Kyoto 6020008 (JP)
(74) Representative: Dehns

(56) References cited:
- EP-A2- 0 581 413
- WO-A1-01/16587
- WO-A1-01/71331
- US-A- 5 916 428
- US-B1- 6 387 234
- US-B2- 6 787 111

## Description

### BACKGROUND OF THE INVENTION

### 1. Field of the Invention:

The present invention relates to a technique for analyzing a sample such as a body fluid. The present invention particularly relates to an analysis apparatus and an analysis method that use capillary electrophoresis.

### 2. Description of Related Art:

Capillary electrophoresis is a conventionally known analysis method that analyzes the amount or concentration of a particular component contained in a sample. In capillary electrophoresis, a separation channel having a relatively small cross-sectional area is filled with an electrophoresis liquid, and a sample is introduced into an end of the separation channel. Then, by application of voltage across the separation channel, an electro-osmotic flow is created to cause the electrophoresis liquid to migrate from the positive electrode side to the negative electrode side. Also, by application of voltage, the particular component in the sample tries to migrate according to its electrophoretic mobility. Accordingly, the particular component migrates according to the velocity vector obtained by combining the velocity vector of the electro-osmotic flow and the velocity vector of the electrophoretic migration. With this migration, the particular component is separated from other components. The separated particular component is detected by, for example, an optical technique, and thereby the amount or concentration of the particular component can be analyzed.

A related analysis apparatus and method is disclosed in US6787111.

In the case where the above analysis method is performed using a plurality of samples, a plurality of separation channels are prepared, and the separation channels are repeatedly used. In this case, if the previous sample remains in the separation channels after the preceding analysis, the next analysis will not be correctly carried out. For this reason, it is necessary to clean each separation channel after each analysis. FIG. 8 is a timing chart according to a conventional analysis method (see Japanese Patent No. 4375031). This analysis method uses four separation channels 91a, 91b, 91c and 91d.

A preprocessing step 92a including a step of cleaning the separation channel 91a is carried out first. A capillary electrophoretic analysis step 93a is carried out on the separation channel 91a after the preprocessing step 92a. When the preprocessing step 92a ends, then, a preprocessing step 92b and an analysis step 93b are carried out on the separation channel 91b. When the preprocessing step 92b ends, then, a preprocessing step 92c and an analysis step 93c are carried out on the separation channel 91c. When the preprocessing step 92c ends, then, a preprocessing step 92d and an analysis step 93d are carried out on the separation channel 91d. This method eliminates the need to wait for, for example, the preprocessing step 92b to start until the analysis step 93a ends, achieving a reduction of the time required to complete all the analysis steps.

In the case where more samples are analyzed, however, more efficient analysis is required. According to the above analysis method, for example, with respect to the separation channel 91b, it is not possible to start the analysis step 93b unless a period of time obtained by adding the time required to complete the preprocessing step 92a and the time required to complete the preprocessing step 92b, has elapsed. As described above, in the above analysis method, the latency time for the analysis step 93a, 93b, 93c or 93d is an obstacle to reducing the entire analysis time.

### SUMMARY OF THE INVENTION

The present invention has been proposed under the circumstances described above, and it is an object of the present invention to provide an analysis apparatus and an analysis method according to independent claims 1 and 15 with which more efficient analysis is possible.

An analysis apparatus provided according to a first aspect of the present invention includes: a plurality of separation channels for separating a particular component contained in a sample; a detector for detecting the separated particular component; and a control unit for controlling an analysis step including a separation step of performing the separating of the particular component and a detection step of performing the detection in each of the separation channels, and a preprocessing step of putting each of the separation channels into a state in which it can perform the analysis step, wherein the control unit simultaneously carries out at least parts of the preprocessing steps of at least two of the plurality of separation channels, wherein the control unit sets start times of the preprocessing steps performed in the plurality of separation channels to different times.

According to a preferred embodiment of the present invention, the preprocessing step includes a cleaning step of cleaning the respective separation channel.

According to a preferred embodiment of the present invention, a cleaning liquid reservoir storing a cleaning liquid for use in the cleaning step is further provided, the plurality of separation channels are connected to the cleaning liquid reservoir via a branched channel, and the control unit controls flow of the cleaning liquid from the cleaning liquid reservoir to any of the plurality of separation channels.

According to a preferred embodiment of the present invention, the branched channel is provided with a switching valve for switching the flow of the cleaning liquid from the cleaning liquid reservoir to any of the plurality of separation channels, and the switching operation of the switching valve is controlled by the control unit.

According to a preferred embodiment of the present invention, the separation step uses electrophoresis, an electrophoresis liquid reservoir storing an electrophoresis liquid for use in the electrophoresis is connected on an upstream side of the switching valve, and the control unit selectively introduces the cleaning liquid or the electrophoresis liquid into any of the plurality of separation channels by the switching operation of the switching valve.

According to a preferred embodiment of the present invention, the preprocessing step further includes a filling step of filling the cleaned separation channel with the electrophoresis liquid.

According to a preferred embodiment of the present invention, the control unit sets start times of the preprocessing steps or start times of the analysis steps performed in the plurality of separation channels to different times.

According to a preferred embodiment of the present invention, the detector includes a plurality of detection units provided at each of the separation channels.

According to a preferred embodiment of the present invention, each of the detection units performs detection at a position shifted from the center toward either end of the corresponding one of the separation channels, and the sample can be introduced into the separation channel from either of the ends thereof.

According to a preferred embodiment of the present invention, a pressure generator for applying a pressure that can discharge a liquid filling each of the separation channels is connected to the plurality of separation channels.

According to a preferred embodiment of the present invention, a manifold for equalizing the pressure applied to the plurality of separation channels is provided between the plurality of separation channels and the pressure generator.

According to a preferred embodiment of the present invention, a dispenser having a nozzle for dispensing the sample to each of the separation channels is further provided, and the preprocessing step further includes a dispensing step of dispensing the sample into the separation channel.

According to a preferred embodiment of the present invention, a sample vessel that contains the sample and has a lid for shielding the sample from an external atmosphere is further provided, and the nozzle is capable of penetrating the lid.

According to a preferred embodiment of the present invention, the preprocessing step includes a diluting step of diluting the sample with a diluent in a dilution vessel, and the sample and the diluent are agitated by drawing and discharging between the nozzle and the dilution vessel.

According to a preferred embodiment of the present invention, the separation step uses electrophoresis, and an electrophoresis liquid for use in the electrophoresis functions as the diluent.

According to a preferred embodiment of the present invention, each of the separation channels includes a pair of electrodes, each electrode being provided at a position closer to an end of the separation channel, a shared power source unit that applies a voltage that can cause electrophoresis in each of the separation channels and a switch with which the pair of electrodes of any of the plurality of separation channels is to be electrically connected to the power source unit can be selected are provided, and the switching operation of the switch is controlled by the control unit.

According to a preferred embodiment of the present invention, the power source unit is capable of switching the polarity of the voltage applied to each of the separation channels.

According to a preferred embodiment of the present invention, when the analysis step is performed in two or more of the separation channels using the same sample, the control unit averages analytical results obtained in the separation channels.

According to a preferred embodiment of the present invention, the control unit performs the averaging process by excluding an analytical result determined to be anomalous from the analytical results obtained in the two or more of the separation channels.

According to a preferred embodiment of the present invention, the control unit performs a correction calculation process on the analytical results using a correction coefficient set for each of the separation channels.

An analysis method provided according to a second aspect of the present invention includes: an analysis step that includes a separation step of separating a particular component contained in a sample introduced into a plurality of separation channels and a detection step of detecting the separated particular component using a detector; and a preprocessing step of putting each of the separation channels into a state in which it can perform the analysis step, wherein at least parts of the preprocessing steps of at least two of the plurality of separation channels are carried out simultaneously, and wherein start times of the preprocessing steps performed in the plurality of separation channels are set to different times.

According to a preferred embodiment of the present invention, the preprocessing step includes a cleaning step of cleaning the respective separation channel.

According to a preferred embodiment of the present invention, the plurality of separation channels are connected to a cleaning liquid reservoir storing a cleaning liquid for use in the cleaning step via a branched channel, and the cleaning liquid is selectively poured into any of the plurality of separation channels from the cleaning liquid reservoir.

According to a preferred embodiment of the present invention, the branched channel is provided with a switching valve for switching the flow of the cleaning liquid from the cleaning liquid reservoir to any of the plurality of separation channels.

According to a preferred embodiment of the present invention, the separation step uses electrophoresis, an electrophoresis liquid reservoir storing an electrophoresis liquid for use in the electrophoresis is connected on an upstream side of the switching valve, and the cleaning liquid or the electrophoresis liquid is selectively introduced into any of the plurality of separation channels by the switching operation of the switching valve.

According to a preferred embodiment of the present invention, the preprocessing step further includes a filling step of filling the cleaned separation channel with the electrophoresis liquid.

According to a preferred embodiment of the present invention, start times of the preprocessing steps or start times of the analysis steps performed in the plurality of separation channels are set to different times.

According to a preferred embodiment of the present invention, the detector includes a plurality of detection units provided at each of the separation channels.

According to a preferred embodiment of the present invention, each of the detection units performs detection at a position shifted from the center toward either end of the corresponding one of the separation channels, and the sample can be introduced into the separation channel from either of the ends thereof.

According to a preferred embodiment of the present invention, a pressure generator for applying a pressure that can discharge a liquid filling each of the separation channels is connected to the plurality of separation channels.

According to a preferred embodiment of the present invention, a manifold for equalizing the pressure applied to the plurality of separation channels is provided between the plurality of separation channels and the pressure generator.

According to a preferred embodiment of the present invention, the preprocessing step further includes a dispensing step of dispensing the sample into the separation channel using a dispenser having a nozzle.

According to a preferred embodiment of the present invention, the sample is aspirated into the dispenser by causing the nozzle to penetrate a lid for shielding the sample from an external atmosphere provided in a sample vessel that contains the sample.

According to a preferred embodiment of the present invention, the preprocessing step includes a diluting step of diluting the sample with a diluent in a dilution vessel, and the sample and the diluent are agitated by drawing and discharging between the nozzle and the dilution vessel.

According to a preferred embodiment of the present invention, the separation step uses electrophoresis, and an electrophoresis liquid for use in the electrophoresis functions as the diluent.

According to a preferred embodiment of the present invention, each of the separation channels includes a pair of electrodes, each electrode being provided at a position closer to an end of the separation channel, and a voltage that can cause electrophoresis is selectively applied to the pair of electrodes of each of the separation channels by switching the switch of the shared power source unit.

According to a preferred embodiment of the present invention, the power source unit is capable of switching the polarity of the voltage applied to each of the separation channels.

According to a preferred embodiment of the present invention, each of the separation channels has a circular cross section with a diameter of 25 to 100 µm or a rectangular cross section with a side measuring 25 to 100 µm.

According to a preferred embodiment of the present invention, the sample contains hemoglobin.

According to a preferred embodiment of the present invention, the sample is blood.

According to a preferred embodiment of the present invention, when the analysis step is performed in two or more of the separation channels using the same sample, analytical results obtained in the separation channels are averaged.

According to a preferred embodiment of the present invention, the averaging process is performed by excluding an analytical result determined to be anomalous from the analytical results obtained in the two or more of the separation channels.

According to a preferred embodiment of the present invention, a correction calculation process is performed on the analytical results using a correction coefficient set for each of the separation channels.

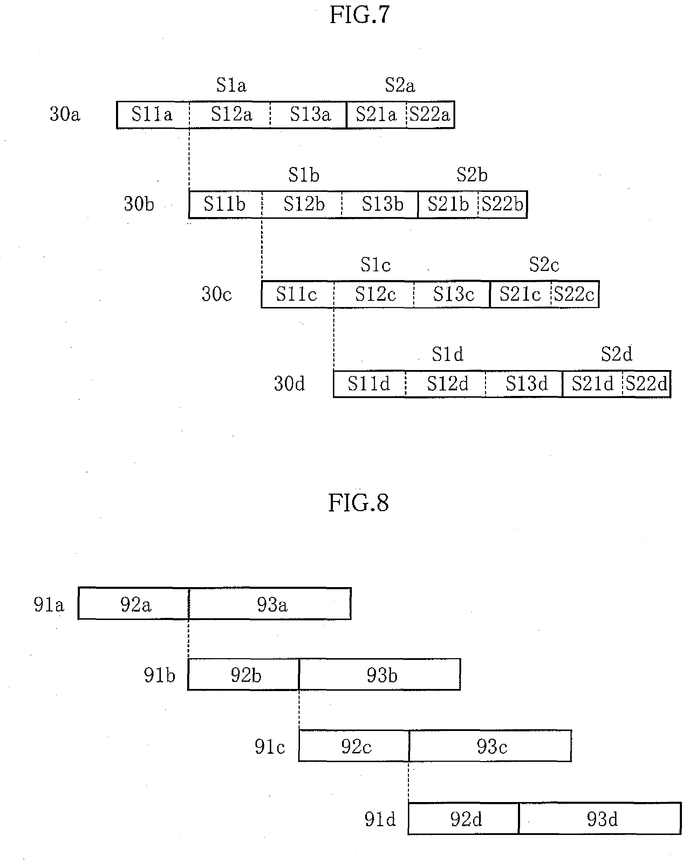

With the configuration described above, the time required to complete the preprocessing steps of the plurality of separation channels is clearly shorter than the total time required to individually complete each preprocessing step. It is therefore possible to, for example, finish the above analysis steps in a considerably shorter time than that required in the example shown in FIG 8. Consequently, analysis using the above analysis apparatus can be performed more efficiently.

Other features and advantages of the present invention will be more apparent from the following detailed description of the preferred embodiments of the invention, which will be described by way of example only and with reference to the following drawings in which:
FIG. 1 is a schematic system diagram showing an example of an analysis apparatus according to the present invention;
FIG. 2 is a circuit diagram showing the configuration of a power source of the analysis apparatus shown in FIG. 1;
FIG. 3 is a flowchart showing an example of an analysis method according to the present invention;
FIG. 4 is a schematic diagram showing a step of extracting a sample from a sample vessel;
FIG. 5 is a schematic diagram showing a dilution and agitation step performed in a dilution vessel;
FIG. 6 is a schematic diagram showing a dispensing step of dispensing into a separation channel;
FIG. 7 is a timing chart showing an example of an analysis method according to the present invention; and
FIG. 8 is a timing chart showing an example of a conventional analysis method.

### DETAILED DESCRIPTION OF THE PREFERRED EMBODIMENTS

Preferred embodiments of the present invention will be described below with reference to the drawings.

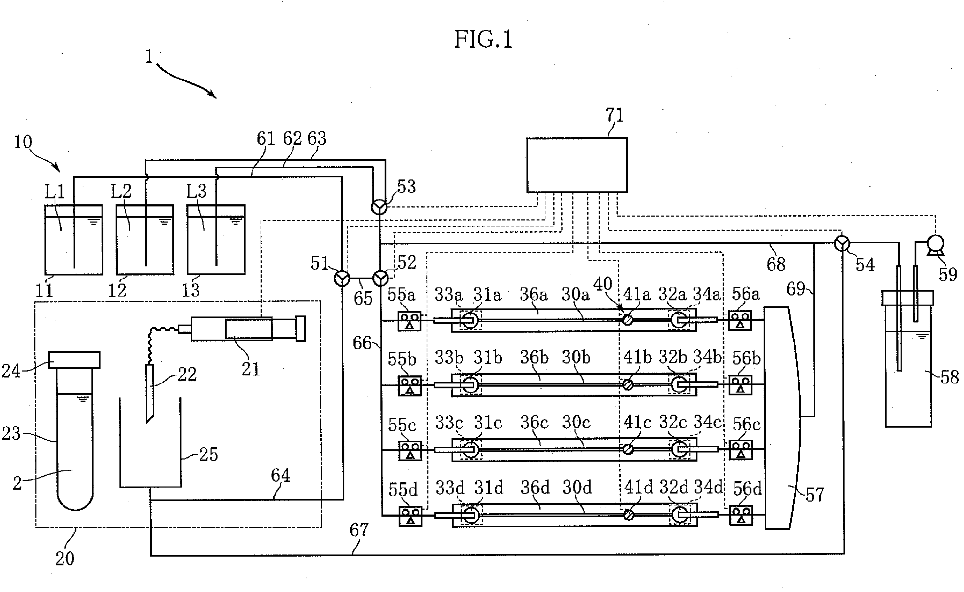

FIG. 1 shows an example of an analysis apparatus according to the present invention. An analysis apparatus 1 according to the present embodiment includes a reservoir unit 10, a dispenser 20, a plurality of separation channels 30a, 30b, 30c and 30d, a detector 40, a control unit 71, and a power source unit 72. In the present embodiment, the analysis apparatus 1 performs analysis using capillary electrophoresis. In order to facilitate the understanding, the power source unit 72 is not shown in FIG. 1.

The reservoir unit 10 includes an electrophoresis liquid reservoir 11, a purified water reservoir 12, and a cleaning liquid reservoir 13. The electrophoresis liquid reservoir 11 stores an electrophoresis liquid L1. The electrophoresis liquid L1 is a liquid that functions as what is called a buffer in capillary electrophoresis, and can be, for example, 100 mM of arginine malate buffer (pH 5.0). The purified water reservoir 12 stores purified water L2. The cleaning liquid reservoir 13 stores a cleaning liquid L3.

The dispenser 20 has a function of dispensing a sample 2 into the separation channels 30a, 30b, 30c and 30d and diluting the sample 2 to a state that is suitable for analysis. The dispenser 20 includes a sample vessel 23, a dilution vessel 25, a syringe 21, and a nozzle 22.

The sample vessel 23 can be, for example, a blood collection tube made of glass and may contain the sample 2 such as, for example, whole blood. A lid 24 made of, for example, rubber is fitted to the sample vessel 23. The dilution vessel 25 serves as a place for diluting whole blood as the sample 2 to a concentration that is suitable for analysis. The syringe 21 includes a tubular member (barrel) and a plunger capable of drawing in and discharging from the tubular member. The syringe 21 is connected to the nozzle 22. The nozzle 22 is a portion into and out of which the sample 2 is drawn according to the drawing and discharge movement of the plunger (or in other words, the syringe 21). In the present embodiment, the nozzle 22 is made of, for example, stainless steel, and has an obliquely cut sharp tip. Also, the nozzle 22 is supported by a driving mechanism (not shown). With this driving mechanism, the nozzle 22 can be inserted into and withdrawn from the sample vessel 23, as well as entering and leaving the dilution vessel 25 and entering and leaving inlets 31a, 31b, 31c and 31d of the separation channels 30a, 30b, 30c and 30d. Furthermore, the nozzle 22 may be capable of entering and leaving outlets 32a, 32b, 32c and 32d.

The separation channels 30a, 30b, 30c and 30d serve as places where analysis using capillary electrophoresis is performed, and are fine flow paths formed in main bodies 36a, 36b, 36c and 36d made of, for example, silica. The separation channels 30a, 30b, 30c and 30d preferably have a circular cross section with a diameter of 25 to 100 µm or a rectangular cross section with a side measuring 25 to 100 µm, but the configuration is not limited thereto as long as the separation channels have a shape and size that are suitable to perform capillary electrophoresis. Also, in the present embodiment, the length of the separation channels 30a, 30b, 30c and 30d can be, but is not limited to, approximately 30 mm.

The separation channels 30a, 30b, 30c and 30d have the inlets 31a, 31b, 31c and 31d and the outlets 32a, 32b, 32c and 32d formed therein. The inlets 31a, 31b, 31c and 31d are portions which are provided at an end of the separation channels 30a, 30b, 30c and 30d and through which the sample 2 is introduced. In the present embodiment, the electrophoresis liquid L1, the purified water L2 and the cleaning liquid L3 can be introduced. The outlets 32a, 32b, 32c and 32d are portions which are provided at the other end of the separation channels 30a, 30b, 30c and 30d and through which the sample 2, the electrophoresis liquid L1, the purified water L2 and the cleaning liquid L3 in the separation channels 30a, 30b, 30c and 30d are discharged.

Also, the separation channels 30a, 30b, 30c and 30d are provided with electrodes 33a, 33b, 33c and 33d and electrodes 34a, 34b, 34c and 34d. In the present embodiment, the electrodes 33a, 33b, 33c and 33d are exposed at the inlets 31a, 31b, 31c and 31d, and the electrodes 34a, 34b, 34c and 34d are exposed at the outlets 32a, 32b, 32c and 32d.

The detector 40 is provided to analyze a particular component that has been separated from other components of the sample 2 in the separation channels 30a, 30b, 30c and 30d, and includes detection units 41a, 41b, 41c and 41d. The detection units 41a, 41b, 41c and 41d are provided on the separation channels 30a, 30b, 30c and 30d at positions closer to the outlets 32a, 32b, 32c and 32d than are the inlets 31a, 31b, 31c and 31d. The detection units 41a, 41b, 41c and 41d are each composed of, for example, a light source (not shown) and a light-receiving portion (not shown). Light from the light source is directed to the sample 2, and the light reflected off at the sample 2 is received by the light-receiving portion. The absorbance of the sample 2 is thereby measured.

The control unit 71 is provided to control the operations of the constituent elements of the analysis apparatus 1, and is configured to perform a series of control operations to implement the analysis with the analysis apparatus 1. The
control unit 71 includes, for example, a CPU, a memory, an input/output interface and so on.

As shown in FIG. 1, the analysis apparatus 1 is provided with three-way valves 51, 52, 53 and 54. The three-way valves 51, 52, 53 and 54 each have three connection ports (not shown), and opening and closure of communication between the connection ports is independently controlled by the control unit 71.

The electrophoresis liquid reservoir 11 is connected to the three-way valve 51 via a channel 61. The purified water reservoir 12 and the cleaning liquid reservoir 13 are connected to the three-way valve 53 via channels 62 and 63. The dilution vessel 25 is connected to the three-way valve 51 via a channel 64, and is also connected to the three-way valve 54 via a channel 67. The three-way valve 51 is connected to the three-way valve 52 via a channel 65. The three-way valve 53 is connected to the three-way valves 52 and 54 via a branched channel 68.

The separation channels 30a, 30b, 30c and 30d are connected on the downstream side of the three-way valve 52 via a branched channel 66. Pinch valves 55a, 55b, 55c and 55d are provided at connecting portions of the branched channel 66 connecting to the separation channels 30a, 30b, 30c and 30d. Opening and closure of the pinch valves 55a, 55b, 55c and 55d is controlled by the control unit 71 so as to allow or stop flow into the separation channels 30a, 30b, 30c and 30d. A manifold 57 is connected on the downstream side of the separation channels 30a, 30b, 30c and 30d. Pinch valves 56a, 56b, 56c and 56d are provided between the separation channels 30a, 30b, 30c and 30d and the manifold 57. Opening and closure of the pinch valves 56a, 56b, 56c and 56d is controlled by the control unit 71, and opening and closure of communication between the separation channels 30a, 30b, 30c and 30d and the manifold 57 is independently controlled by the control unit 71.

The manifold 57 is connected to the three-way valve 54 via a channel 69. An effluent bottle 58 is connected on the downstream side of the three-way valve 54. The effluent bottle 58 is provided to store used liquids. The effluent bottle 58 is connected to an aspiration pump 59. The aspiration pump 59 generates a negative pressure. The negative pressure is applied to the branched channel 68 and the channel 69 via the three-way valve 54. The manifold 57 functions to cause the negative pressure applied via the channel 69 to act uniformly on the separation channels 30a, 30b, 30c and 30d.

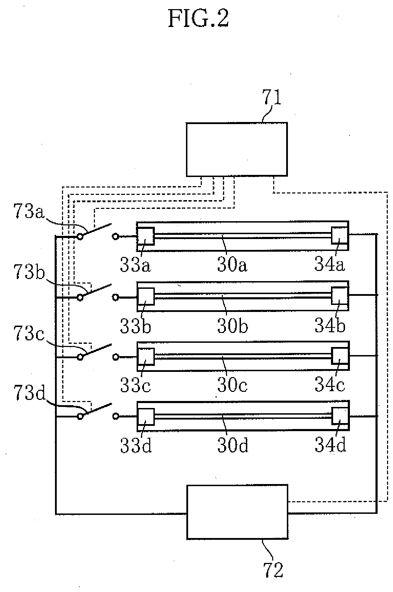

The power source unit 72 is provided to apply a voltage for performing capillary electrophoretic analysis in the separation channels 30a, 30b, 30c and 30d. As shown in FIG. 2, the power source unit 72 is connected to the electrodes 33a, 33b, 33c and 33d and the electrodes 34a, 34b, 34c and 34d. Switches 73a, 73b, 73c and 73d are provided between the power source unit 72 and the electrodes 33a, 33b, 33c and 33d. On/off control of the switches 73a, 73b, 73c and 73d is performed by the control unit 71. Therefore, the power source unit 72 and the electrodes 33a, 33b, 33c and 33d can be electrically connected independently of each other. The voltage applied by the power source unit 72 can be, for example, approximately 1.5 kV. An example will be described below in which the power source unit 72 applies a voltage such that the electrodes 33a, 33b, 33c and 33d become positive electrodes and the electrodes 34a, 34b, 34c and 34d become negative electrodes, but the power source unit 72 may have a function of applying a voltage such that the polarity is reversed.

An analysis method using the analysis apparatus 1 will be described next.

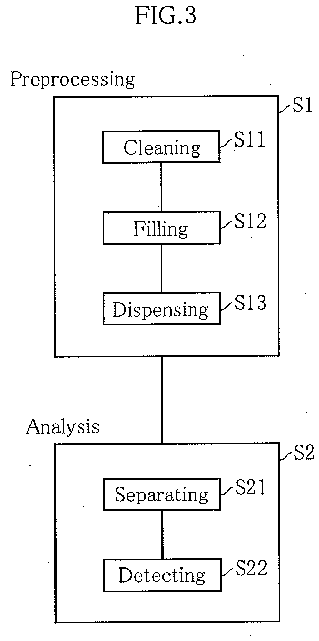

FIG. 3 is a flowchart illustrating steps of the analysis method of the present embodiment carried out using any one of the separation channels 30a, 30b, 30c and 30d. Hereinafter, an example will be described in which the separation channel 30a is used. This flowchart can be roughly divided into a preprocessing step S1 and an analysis step S2. The preprocessing step S1 includes a cleaning step S11, a filling step S12, and a dispensing step S13.

The cleaning step S11 is a step of cleaning out the sample 2 and the like that was used in the previous analysis and is remaining inside the separation channel 30a, which is performed prior to the analysis step S2. Specifically, in FIG. 1, in response to an instruction from the control unit 71, the three-way valve 53 is switched so as to provide communication with the branched channel 68 from the purified water reservoir 12 and the cleaning liquid reservoir 13. Also, the three-way valve 52 is switched to provide communication with the branched channel 66 from the branched channel 68. The pinch valves 55a and 56a are opened, and the pinch valves 55b, 55c, 55d, 56b, 56c and 56d are closed. The three-way valve 54 is caused to provide communication with the effluent bottle 58 from the branched channel 68. In this state, the aspiration pump 59 is activated by the control unit 71. By the negative pressure generated by the aspiration pump 59, the purified water L2 and the cleaning liquid L3 are allowed to fill the separation channel 30a, and then are discharged to the effluent bottle 58. Alternatively, the cleaning step S11 may be carried out by causing the cleaning liquid L3 to pass through the separation channel 30a and thereafter the purified water L2 to pass therethrough.

The filling step S12 is a step of causing the electrophoresis liquid L1 to fill the separation channel 30a in order to implement electrophoresis. Specifically, in response to an instruction from the control unit 71, the three-way valve 51 establishes communication with the channel 61 and the channel 65, and the channel 64 is switched to terminate the communication with these channels. The three-way valve 52 establishes communication with the channel 65 and the branched channel 66, and the branched channel 68 is switched to terminate the communication with these channels. The pinch valves 55a, 55b, 55c, 55d, 56a, 56b, 56c and 56d, and the three-way valve 54 are in the same state as in the cleaning step S11 described above. In this state, the aspiration pump 59 is activated. The separation channel 30a is thereby filled with the electrophoresis liquid L1.

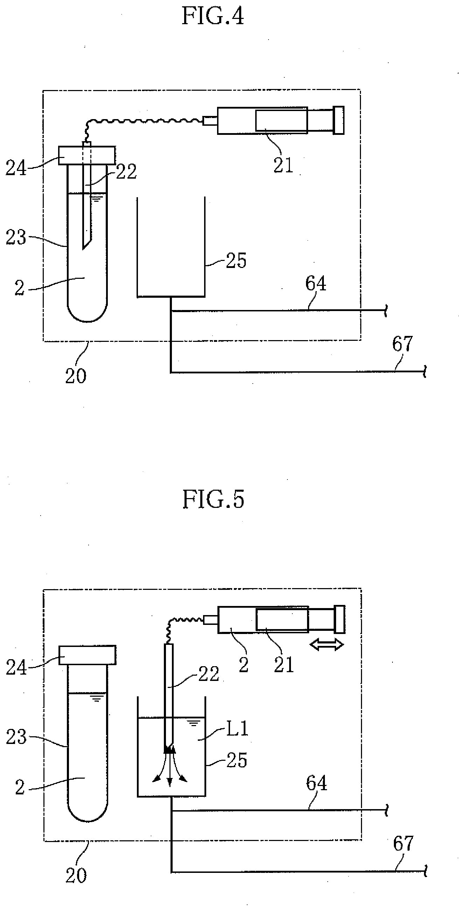

The dispensing step S13 is a step of dispensing the sample 2 into the separation channel 30a through the inlet 31a. The dispensing step of the present embodiment includes a step of diluting the sample 2 to a state that is suitable for analysis. Specifically, as shown in FIG. 4, in response to an instruction from the control unit 71, the driving mechanism described above (not shown) causes the nozzle 22 to penetrate the lid 24 and the tip of the nozzle 22 to submerge in the sample 2. Then, the driving mechanism causes the syringe 21 to perform a drawing operation so as to extract the sample 2 into the syringe 21 through the nozzle 22.

Meanwhile, in FIG. 1, the three-way valve 51 is switched such that the channel 61 and the channel 64 communicate with each other. The electrophoresis liquid L1 is introduced into the dilution vessel 25 by generating a pressure using a pump (not shown) or the like. Next, as shown in FIG. 5, the nozzle 22 is caused to enter the electrophoresis liquid L1 contained in the dilution vessel 25 by the driving mechanism described above. Then, the syringe 21 is caused to perform a discharge operation so as to introduce the sample 2 into the dilution vessel 25. At this time, it is preferable to cause the syringe 21 to repeatedly carry out the drawing operation and the discharge operation in order to promote agitation of the sample 2 and the electrophoresis liquid L1. In the present embodiment, the sample 2 can be, for example, whole blood containing hemoglobin, or the like, and the electrophoresis liquid L1 contains a hemolytic component that exhibits hemolytic activity that destroys the blood cell membrane. Accordingly, the blood cells contained in the sample 2 are hemolyzed to a state that is suitable for hemoglobin analysis.

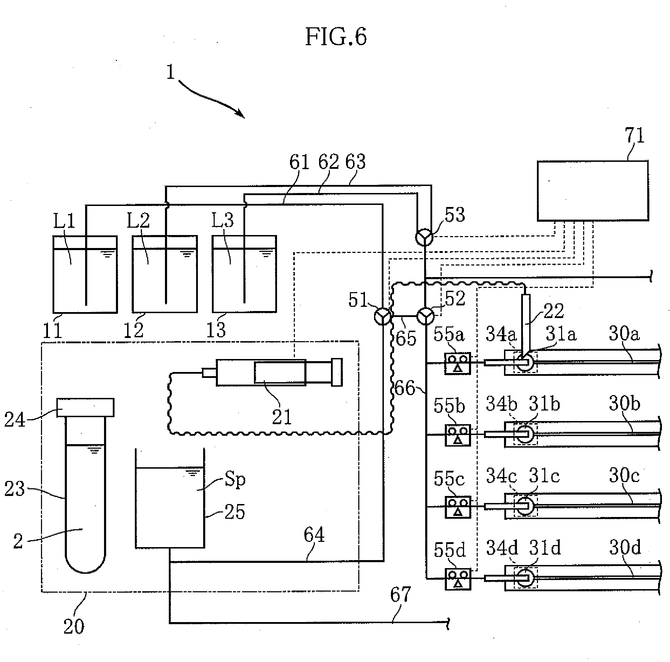

Next, the sample 2 diluted in the dilution vessel 25 is aspirated by the syringe 21. Then, as shown in FIG. 6, the tip of the nozzle 22 is caused to enter the inlet 31a of the separation channel 30a by the driving mechanism described above. In this state, the syringe 21 is caused to perform a discharge operation so as to introduce the diluted sample 2 into the inlet 31a. Through the above processing, the preprocessing step S1 is completed, and the separation channel 30a is in a state ready for analysis.

In the present embodiment, the dispensing step S13 includes a diluting step, but in the case where the analyte is a sample 2 that does not require dilution, the dispensing step S13 can be carried out without the diluting step being performed.

Next, the analysis step S2 is carried out. As shown in FIG. 3, the analysis step S2 includes a separation step S21 and a detection step S22.

The separation step S21 is a step of separating a particular component contained in the sample 2 such as hemoglobin in the electrophoresis liquid L1 filling the separation channel 30a. Specifically, in a circuit as shown in FIG. 2, in response to an instruction from the control unit 71, a switch 73a is turned on. Then, the power source unit 72 applies a voltage to the electrodes 33a and 34a. It is assumed here that the electrode 33a is the positive electrode and the electrode 34a is the negative electrode. By application of voltage, an electro-osmotic flow flowing from the electrode 33a toward the electrode 34a occurs in the electrophoresis liquid L1. Also, the particular component, namely, hemoglobin, migrates according to its electrophoretic mobility. The migration velocity varies from material to material, and therefore the particular component, hemoglobin, migrates from the electrode 33a toward the electrode 34a at a velocity different from that of other components.

The detection step S22 is a step of detecting the amount, concentration or the like of the separated particular component such as hemoglobin. Specifically, in response to an instruction from the control unit 71, the detection unit 41a emits light having a wavelength of, for example, 415 nm to a portion of the separation channel 30a indicated by a hatched circle in FIG. 1 from the light source (not shown) described above. The reflected light is then received by the light-receiving portion described above. When the separated particular component, namely, hemoglobin, passes through the portion to which light is emitted from the light source, there is a change in the absorbance obtained based on the light receiving state of the receiving portion. This change is processed by the control unit 71, whereby the amount or concentration of hemoglobin can be detected. The results of the detection are stored in the memory of the control unit 71 as analytical results of the separation channel 30a. Through the above processing, the preprocessing step S1 and the analysis step S2 in the separation channel 30a are completed.

The preprocessing step S1 and the analysis step S2 described above are carried out in the same manner on the separation channels 30b, 30c and 30d. These steps can be carried out independently in each of the separation channels 30a, 30b, 30c and 30d by opening and closing the pinch valves 55a, 55b, 55c, 55d, 56a, 56b, 56c and 56d.

Next, the preprocessing step S1 and the analysis step S2 using the separation channels 30a, 30b, 30c and 30d will be described. As shown in FIG. 7, a preprocessing step S1a and an analysis step S2a are carried out using the separation channel 30a. A preprocessing step S1b and an analysis step S2b are carried out using the separation channel 30b. A preprocessing step S1c and an analysis step S2c are carried out using the separation channel 30c. A preprocessing step S1d and an analysis step S2d are carried out using the separation channel 30d. For the sake of convenience, subscripts are added to read as the preprocessing steps S1a, S1b, S1c and S1d and the analysis steps S2a, S2b, S2c and S2d in order to distinguish them from each other, but these steps are the same as the preprocessing step S1 and the analysis step S2. Likewise, cleaning steps S11a, S11b, S11c and S11d, filling steps S12a, S12b, S12c and S12d, dispensing steps S13a, S13b, S13c and S13d, separation steps S21a, S21b, S21c and S21d, and detection steps S22a, S22b, S22c and S22d are the same as the cleaning step S11, the filling step S12, the dispensing step S13, the separation step S21 and the detection step S22 described above, respectively.

First, the preprocessing step S1a using the separation channel 30a is commenced. When the cleaning step S11a of the preprocessing step S1a ends, the preprocessing step S1b using the separation channel 30b is commenced. Parallel to this step, the filling step S12a, the dispensing step S13a and the analysis step S2a using the separation channel 30a are carried out. When the cleaning step S11b using the separation channel 30b ends, the preprocessing step S1c using the separation channel 30c is commenced. Parallel to this step, the filling step S12b, the dispensing step S13b and the analysis step S2b using the separation channel 30b are carried out. Then, when the cleaning step S11c using the separation channel 30c ends, the preprocessing step S1d using the separation channel 30d is commenced. Parallel to this step, the filling step S12c, the dispensing step S13c and the analysis step S2c using the separation channel 30c are carried out. When the cleaning step Sild ends, the filling step S12d, the dispensing step S13d and the analysis step S2d using the separation channel 30d are then carried out. In this manner, in the present embodiment, the cleaning steps S11a, S11b, S11c and S11d can be continuously carried out without a delay. The preprocessing steps S1a, S1b, S1c and S1d and the analysis steps S2a, S2b, S2c and S2d are set to start at different times.

Next, the analysis apparatus 1 and the action of the analysis method using the analysis apparatus 1 will be described.

According to the present embodiment, as shown in FIG. 7, the time required to complete the preprocessing steps S1a, S1b, S1c and S1d is clearly shorter than the total time required to individually complete each of the preprocessing steps S1a, S1b, S1c and S1d. It is therefore possible to, for example, finish the analysis steps S2a, S2b, S2c and S2d in a considerably shorter time than that required in the example shown in FIG. 8. Consequently, the analysis using the analysis apparatus 1 can be performed more efficiently.

As shown in FIG. 1, the separation channels 30a, 30b, 30c and 30d are connected to the shared electrophoresis liquid reservoir 11, purified water reservoir 12 and cleaning liquid reservoir 13 via the branched channel 66. The pinch valves 55a, 55b, 55c and 55d provided on the upstream side of the separation channels 30a, 30b, 30c and 30d are capable of opening and closing separately from each other, and it is therefore possible to selectively pour the electrophoresis liquid L1, the purified water L2 and the cleaning liquid L3 into the separation channels 30a, 30b, 30c and 30d. This is suitable to carry out the preprocessing steps S1a, S1b, S1c and S1d in parallel.

As shown in FIG. 2, because the switches 73a, 73b, 73c and 73d are provided, a voltage can be selectively applied to the separation channels 30a, 30b, 30c and 30d from the shared power source unit 72. Furthermore, it is also possible to apply a voltage simultaneously to any two of the separation channels 30a, 30b, 30c and 30d. This is suitable to carry out the detection steps S22a, S22b, S22c and S22d in parallel.

The nozzle 22 of the dispenser 20 is capable of penetrating the lid 24, and therefore the sample 2 can be properly extracted from the sample vessel 23. Also, with repetition of drawing and discharge operations of the syringe 21, agitation of the sample 2 and the electrophoresis liquid L1 as a diluent can be suitably promoted in the dilution vessel 25. The nozzle 22 can dispense the sample 2 separately to the inlets 31a, 31b, 31c and 31d of the separation channels 30a, 30b, 30c and 30d. It is thereby possible to dispense the sample 2 to one of the separation channels 30a, 30b, 30c and 30d that has completed the filling step S12a, S12b, S12c or S12d without a delay.

The presence of the manifold 57 can suppress a situation in which the negative pressure from the aspiration pump 59 is applied unequally to the separation channels 30a, 30b, 30c and 30d.

Dispensing using the nozzle 22 can be carried out on the outlets 32a, 32b, 32c and 32d. In this case, the power source unit 72 applies a voltage such that the electrodes 34a, 34b, 34c and 34d become positive electrodes and the electrodes 33a, 33b, 33c and 33d become negative electrodes. Because the detection units 41a, 41b, 41c and 41d are disposed at positions shifted from the center of the separation channels 30a, 30b, 30c and 30d toward the outlets 32a, 32b, 32c and 32d, reversing the polarity changes the migration distance from the start point of electrophoretic migration to the detection units 41a, 41b, 41c and 41d, whereby analysis under different conditions can be carried out.

The analysis apparatus and analysis method according to the present invention are not limited to the embodiment described above. The specific configurations of the analysis apparatus and analysis method of the present invention can be designed and changed in various ways.

It is possible to use a configuration in which analyses using the same sample 2 are performed in any two or more of the separation channels 30a, 30b, 30c and 30d. In this case, the control unit 71 calculates the final analytical result of the sample 2 by averaging the analytical results obtained by performing multiple analyses. In the case where there is an analytical result obtained from multiple analyses that deviates significantly from a predetermined range or that departs excessively from the average value of the multiple analytical results, the control unit 71 may determine such an analytical result as an anomalous result, and the analytical results determined as anomalous may be removed from the averaging process.

It is also possible to use a configuration in which the control unit 71 performs a correction calculation process on the analytical result of each of the separation channels 30a, 30b, 30c and 30d. For example, in the case where the analyte is hemoglobin (Hb), prior to the preprocessing step S1 and the analysis step S2 described above, a calibration sample having a known concentration is analyzed in each of the separation channels 30a, 30b, 30c and 30d. This analytical result (the percentage of HbA1c) is compared with the known percentage of HbAlc contained in the calibration sample so as to calculate a correction coefficient for each of the separation channels 30a, 30b, 30c and 30d. Then, the correction calculation process is performed on the analytical result obtained by actual measurement performed in each of the separation channels 30a, 30b, 30c and 30d by using the correction coefficient obtained above. With this configuration, the analytical results can be corrected to more accurate values.

Another technique of the correction calculation process is to correct the correlation between the migration velocity and the measured result. In analysis using electrophoresis, components having a slower migration velocity require more time to pass through the detection units 41a, 41b, 41c and 41d. Even when the actual concentration is the same, the measured values tend to be larger as the time required to pass through the detection unit increases. For this reason, it is advisable to prepare correction coefficients according to the time required for detection for each of the separation channels 30a, 30b, 30c and 30d. By performing the correction calculation on the actual analytical results using the correction coefficients corresponding to the time required for detection, it is possible to suppress variations in the analytical results due to different migration velocities. The correlation relationship between the detection time and the analytical result may vary according to the number of uses of the separation channels 30a, 30b, 30c and 30d. Accordingly, it is preferable to set the correction coefficients as values correlated with the number of uses.

In the present embodiment, four separations channels, namely, the separation channels 30a, 30b, 30c and 30d, are provided, but the number of separation channels is not limited to four. The configuration of the separation channels 30a, 30b, 30c and 30d is not limited to what is called the straight channel, and it is possible to use, for example, a cross injection channel in which two channels intersect with each other. The sample 2 is not limited to a sample containing hemoglobin as typified by whole blood, and it may be sweat, saliva, urine or the like. Other possible examples include samples containing DNA, RNA (ribonucleic acid) and protein.

The analysis performed in the analysis step of the present invention is not limited to the analysis using capillary electrophoresis and may be, for example, analysis using microfluidic chromatography. In this case, in the separation step, separation, elution, reaction and the like are carried out in columns, and in the detection step, detection of the reaction product is performed.

## Claims

1. An analysis apparatus (1) comprising:
a plurality of separation channels (30a-30d) for separating a particular component contained in a sample (2) ;
a detector (40) for detecting the separated particular component; and
a control unit (71) configured to control an analysis step (S2a-S2d) and a preprocessing step (S1a-S1d), the analysis step (S2a-S2d) including a separation step (S21a-S21d) of performing the separating of the particular component and a detection step (S22a-S22d) of performing the detection in each of the separation channels (30a-30d), the preprocessing step being configured to put each of the separation channels (30a-30d) into a state in which it can perform the analysis step (S2a-S2d),
wherein the control unit (71) is configured to simultaneously carry out at least parts of the preprocessing steps (S11a-S13a, S11b-S13b, Sllc-S13c, S11d-s13d) of at least two of the plurality of separation channels (30a-30d), and
wherein the control unit (71) is configured to set start times of the preprocessing steps (S1a-S1d) performed in the plurality of separation channels (30a-30d) to different times.

2. The analysis apparatus (1) according to claim 1, wherein the preprocessing step (S1a-S1d) includes a cleaning step (S11a-S11d) of cleaning the respective separation channel.

3. The analysis apparatus (1) according to claim 2, further comprising a cleaning liquid reservoir (13) storing a cleaning liquid (L3) for use in the cleaning step (S11a-S11d),
wherein the plurality of separation channels (30a-30d) are connected to the cleaning liquid reservoir (13) via a branched channel (66), and
the control unit (71) is configured to control the flow of the cleaning liquid (L3) from the cleaning liquid reservoir (13) to any of the plurality of separation channels (30a-30d);
preferably wherein:
the branched channel (66) is provided with a switching valve (55a-55d) for switching the flow of the cleaning liquid (L3) from the cleaning liquid reservoir (13) to any of the plurality of separation channels (30a-30d), and
the control unit (71) is configured to control the switching operation of the switching valve (55a-55d).

4. The analysis apparatus (1) according to claim 3, wherein the separation step (S21a-S21d) uses electrophoresis,
an electrophoresis liquid reservoir (11) storing an electrophoresis liquid (L1) for use in the electrophoresis is connected on an upstream side of the switching valve (55a-55d), and
the control unit (71) is configured to selectively introduce the cleaning liquid (L3) or the electrophoresis liquid (L1) into any of the plurality of separation channels (30a-30d) by the switching operation of the switching valve (55a-55d).

5. The analysis apparatus (1) according to claim 4, wherein the preprocessing step (S1a-S1d) further includes a filling step (S12a-S12d) of filling the cleaned separation channel with the electrophoresis liquid (L1).

6. The analysis apparatus (1) according to any preceding claim, wherein the control unit (71) is configured to set start times of the analysis steps (S2aS2d) performed in the plurality of
separation channels (30a-30d) to different times.

7. The analysis apparatus (1) according to any preceding claim, wherein the detector (40) comprises a plurality of detection units (41a-41d) provided at each of the separation channels (30a-30d);
preferably wherein:
each of the detection units (41a-41d) is configured to perform detection at a position shifted from the center toward either end of the corresponding one of the separation channels (30a-30d), and
the sample (2) can be introduced into the separation channel from either of the ends thereof.

8. The analysis apparatus (1) according to any preceding claim, wherein a pressure generator (59) for applying a pressure that can discharge a liquid filling each of the separation channels (30a-30d) is connected to the plurality of separation channels (30a-30d);
preferably wherein a manifold (57) for equalizing the pressure applied to the plurality of separation channels (30a-30d) is provided between the plurality of separation channels (30a-30d) and the pressure generator (59) .

9. The analysis apparatus (1) according to any of claims 1, 2 or 3, further comprising a dispenser (20) having a nozzle (22) for dispensing the sample (2) to each of the separation channels (30a-30d),
wherein the preprocessing step (S1a-S1d) further includes a dispensing step (S13a-S13d) of dispensing the sample (2) into the separation channel;
preferably wherein:
the analysis apparatus further comprises a sample vessel (23) that contains the sample (2) and has a lid (24) for shielding the sample (2) from an external atmosphere, and
wherein the nozzle (22) is capable of penetrating the lid (24).

10. The analysis apparatus (1) according to claim 9, wherein the preprocessing step (S1a-S1d) includes a diluting step of diluting the sample (2) with a diluent in a dilution vessel (25), and
the sample (2) and the diluent are agitated by drawing and discharging between the nozzle (22) and the dilution vessel (25).

11. The analysis apparatus (1) according to claim 10, wherein the separation step (S21a-S21d)uses electrophoresis, and
an electrophoresis liquid (L1) for use in the electrophoresis functions as the diluent.

12. The analysis apparatus (1) according to claim 4 or 11, wherein each of the separation channels (30a-30d) includes a pair of electrodes (33a-33d; 34a-34d), each electrode being provided at a position closer to an end of the separation channel,
a shared power source unit (72) that is configured to apply a voltage that can cause electrophoresis in each of the separation channels (30a-30d) and a switch (73a-73d) with which the pair of electrodes (33a-33d; 34a-34d) of any of the plurality of separation channels (30a-30d) is to be electrically connected to the power source unit (72) can be selected are provided, and
the control unit (71) is configured to control the switching operation of the switch (73a-73d;
preferably wherein the power source unit (72) is capable of switching the polarity of the voltage applied to each of the separation channels (30a-30d).

13. The analysis apparatus (1) according to any preceding claim, wherein, when the analysis step (S2a-S2d) is performed in two or more of the separation channels (30a-30d) using the same sample, the control unit (71) is configured to average analytical results obtained in the separation channels (30a-30d);
preferably wherein the control unit (71) is configured to perform the averaging process by excluding an analytical result determined to be anomalous from the analytical results obtained in the two or more of the separation channels (30a-30d).

14. The analysis apparatus (1) according to any preceding claim, wherein the control unit (71) is configured to perform a correction calculation process on the analytical results using a correction coefficient set for each of the separation channels (30a-30d).

15. An analysis method comprising:
an analysis step (S1a-S1d) that includes a separation step (S21a-S21d) of separating a particular component contained in a sample introduced into a plurality of separation channels and a detection step (S22a-S22d) of detecting the separated particular component using a detector; and
a preprocessing step (S1a-S1d) of putting each of the separation channels into a state in which it can perform the analysis step (S1a-S1d),
wherein at least parts of the preprocessing steps (S11a-S13a, S11b-S13b, S11c-S13c, S11d-S13d) of at least two of the plurality of separation channels (30a-30d) are carried out simultaneously, and
wherein start times of the preprocessing steps (S1aS1d) performed in the plurality of separation channels (30a-30d) are set to different times.

16. The analysis method according to claim 15, wherein the preprocessing step (S1a-S1d) includes a cleaning step of cleaning the respective separation channel.

17. The analysis method according to claim 16, wherein the plurality of separation channels are connected to a cleaning liquid reservoir storing a cleaning liquid for use in the cleaning step via a branched channel, and
the cleaning liquid is selectively poured into any of the plurality of separation channels from the cleaning liquid reservoir;
preferably wherein the branched channel is provided with a switching valve for switching the flow of the cleaning liquid from the cleaning liquid reservoir to any of the plurality of separation channels.

18. The analysis method according to any of claims 15, 16 or 17, wherein the separation step uses electrophoresis, and wherein
an electrophoresis liquid reservoir storing an electrophoresis liquid for use in the electrophoresis is connected on an upstream side of the switching valve, and
the cleaning liquid or the electrophoresis liquid is selectively introduced into any of the plurality of separation channels by the switching operation of the switching valve.

19. The analysis method according to claim 18, wherein the preprocessing step (S1a-S1d) further includes a filling step (S12a-S12d) of filling the cleaned separation channel with the electrophoresis liquid (L1).

20. The analysis method according to any of claims 15 to 19, wherein start times of the analysis steps performed in the plurality of separation channels are set to different times.

21. The analysis method according to any of claims 15 to 20, wherein the detector (40) comprises a plurality of detection units (41a-41d) provided at each of the separation channels (30a-30d);
preferably wherein:
each of the detection units (41a-41d) performs detection at a position shifted from the center toward either end of the corresponding one of the separation channels (30a-30d), and
the sample (2) can be introduced into the separation channel from either of the ends thereof.

22. The analysis method according to any of claims 15 to 21, wherein a pressure generator (59) for applying a pressure that can discharge a liquid filling each of the separation channels (30a-30d) is connected to the plurality of separation channels (30a-30d);
preferably wherein a manifold (57) for equalizing the pressure applied to the plurality of separation channels (30a-30d) is provided between the plurality of separation channels (30a-30d) and the pressure generator (59) .

23. The analysis method according to any of claims 15, 16 or 17, wherein the preprocessing step (S1a-S1d) further includes a dispensing step (S13a-S13d) of dispensing the sample into the separation channel using a dispenser having a nozzle;
preferably wherein the sample is aspirated into the dispenser by causing the nozzle to penetrate a lid for shielding the sample from an external atmosphere provided in a sample vessel that contains the sample.

24. The analysis method according to claim 23, wherein the preprocessing step (S1a-S1d) includes a diluting step of diluting the sample (2) with a diluent in a dilution vessel (25), and
the sample (2) and the diluent are agitated by drawing and discharging between the nozzle (22) and the dilution vessel (25).

25. The analysis method according to claim 24, wherein the separation step (S21a-S21d) uses electrophoresis, and
an electrophoresis liquid (L1) for use in the electrophoresis functions as the diluent.

26. The analysis method according to any of claims 18 to 25, wherein each of the separation channels includes a pair of electrodes, each electrode being provided at a position closer to an end of the separation channel, and
a voltage that can cause electrophoresis is selectively applied to the pair of electrodes of each of the separation channels by switching the switch of the shared power source unit;
preferably wherein the power source unit is capable of switching the polarity of the voltage applied to each of the separation channels.

27. The analysis apparatus (1) according to claims 11 or 12, or the analysis method according to claims 25 or 26, wherein each of the separation channels (30a-30d) has a circular cross section with a diameter of 25 to 100 µm or a rectangular cross section with a side measuring 25 to 100 µm.

28. The analysis method according to any of claims 15 to 26, wherein the sample (2) contains hemoglobin;
preferably wherein the sample (2) is blood.

29. The analysis method according to any of claims 17 to 26 or 28, wherein, when the analysis step (S2a-S2d) is performed in two or more of the separation channels using the same sample, analytical results obtained in the separation channels are averaged;
preferably wherein the averaging process is performed by excluding an analytical result determined to be anomalous from the analytical results obtained in the two or more of the separation channels.

30. The analysis method according to any of claims 17 to 26, 28 or 29, wherein a correction calculation process is performed on the analytical results using a correction coefficient set for each of the separation channels.

## Patentansprüche

1. Analysevorrichtung (1), umfassend:
eine Vielzahl von Trennungskanälen (30a-30d) zum Trennen einer bestimmten Komponente, die in einer Probe (2) beinhaltet ist;
einen Detektor (40) zum Erfassen der getrennten bestimmten Komponente; und
eine Steuereinheit (71), die konfiguriert ist, einen Analyseschritt (S2a-S2d) und einen Vorverarbeitungsschritt (S1a-S1d) zu steuern, wobei der Analyseschritt (S2a-S2d) einen Trennungsschritt (S21a-S21d) zum Ausführen der Trennung der bestimmten Komponente und einen Erfassungsschritt (S22a-S22d) zum Ausführen der Erfassung in jedem der Trennungskanäle (30a-30d) enthält, wobei der Vorverarbeitungsschritt konfiguriert ist, jeden der Trennungskanäle (30a-30d) in einen Zustand zu versetzen, in dem er den Analyseschritt (S2a-S2d) ausführen kann,
wobei die Steuereinheit (71) konfiguriert ist, zeitgleich mindestens Teile der Vorverarbeitungsschritte (S11a-S13a, S11b-S13b, S11c-S13c, S11d-S13d) von mindestens zwei der Vielzahl von Trennungskanälen (30a-30d) durchzuführen, und
wobei die Steuereinheit (71) konfiguriert ist, Startzeiten der Vorverarbeitungsschritte (S1a-S1d), die in der Vielzahl von Trennungskanälen (30a-30d) ausgeführt sind, auf unterschiedliche Zeiten einzustellen.

2. Analysevorrichtung (1) nach Anspruch 1, wobei der Vorverarbeitungsschritt (S1aS1d) einen Reinigungsschritt (S11a-S11d) zum Reinigen des jeweiligen Trennungskanals enthält.

3. Analysevorrichtung (1) nach Anspruch 2, weiter umfassend einen Reinigungsflüssigkeitsbehälter (13), der eine Reinigungsflüssigkeit (L3) zur Verwendung im Reinigungsschritt (S11a-S11d) speichert,
wobei die Vielzahl von Trennungskanälen (30a-30d) mit dem Reinigungsflüssigkeitsbehälter (13) über einen verzweigten Kanal (66) verbunden sind, und
die Steuereinheit (71) konfiguriert ist, den Fluss der Reinigungsflüssigkeit (L3) vom Reinigungsflüssigkeitsbehälter (13) zu irgendeinem der Vielzahl von Trennungskanälen (30a-30d) zu steuern;
wobei bevorzugt:
der verzweigte Kanal (66) mit einem Schaltventil (55a-55d) zum Schalten des Flusses der Reinigungsflüssigkeit (L3) vom Reinigungsflüssigkeitsbehälter (13) zu irgendeinem der Vielzahl von Trennungskanälen (30a-30d) bereitgestellt ist, und
die Steuereinheit (71) konfiguriert ist, den Schaltbetrieb des Schaltventils (55a-55d) zu steuern.

4. Analysevorrichtung (1) nach Anspruch 3, wobei der Trennungsschritt (S21a-S21d) Elektrophorese verwendet,
ein Elektrophoreseflüssigkeitsbehälter (11), der eine Elektrophoreseflüssigkeit (L1) zur Verwendung in der Elektrophorese speichert, an einer stromaufwärts liegenden Seite des Schaltventils (55a-55d) verbunden ist, und
die Steuereinheit (71) konfiguriert ist, selektiv die Reinigungsflüssigkeit (L3) oder die Elektrophoreseflüssigkeit (L1) durch den Schaltbetrieb des Schaltventils (55a-55d) in irgendeinen der Vielzahl von Trennungskanälen (30a-30d) einzuleiten.

5. Analysevorrichtung (1) nach Anspruch 4, wobei der Vorverarbeitungsschritt (S1aS1d) weiter einen Füllschritt (S12a-S12d) zum Füllen des gereinigten Trennungskanals mit der Elektrophoreseflüssigkeit (L1) enthält.

6. Analysevorrichtung (1) nach einem der vorstehenden Ansprüche, wobei die Steuereinheit (71) konfiguriert ist, Startzeiten der Analyseschritte (S2a-S2d), die in der Vielzahl von Trennungskanälen (30a-30d) ausgeführt werden, bei unterschiedlichen Zeiten einzustellen.

7. Analysevorrichtung (1) nach einem der vorstehenden Ansprüche, wobei der Detektor (40) eine Vielzahl von Erfassungseinheiten (41a-41d) umfasst, die bei jedem der Trennungskanäle (30a-30d) bereitgestellt sind;
wobei bevorzugt:
jede der Erfassungseinheiten (41a-41d) konfiguriert ist, eine Erfassung an einer Position auszuführen, die vom Mittelpunkt hin zu einem Ende des entsprechenden der Trennungskanäle (30a-30d) verschoben ist, und
die Probe (2) in den Trennungskanal von einem der Enden davon eingeleitet werden kann.

8. Analysevorrichtung (1) nach einem der vorstehenden Ansprüche, wobei ein Druckgenerator (59) zum Anlegen eines Drucks, der eine Flüssigkeit ausstoßen kann, die jeden der Trennungskanäle (30a-30d) füllt, mit der Vielzahl von Trennungskanälen (30a-30d) verbunden ist;
wobei bevorzugt ein Verteiler (57) zum Ausgleichen des Drucks, der auf die Vielzahl von Trennungskanälen (30a-30d) angelegt wird, zwischen der Vielzahl von Trennungskanälen (30a-30d) und dem Druckgenerator (59) bereitgestellt ist.

9. Analysevorrichtung (1) nach einem der Ansprüche 1, 2 oder 3, weiter umfassend einen Spender (20) mit einer Düse (22) zum Abgeben der Probe (2) an jeden der Trennungskanäle (30a-30d),
wobei der Vorverarbeitungsschritt (S1a-S1d) weiter einen Abgabeschritt (S13aS13d) zum Abgeben der Probe (2) in den Trennungskanal enthält;
wobei bevorzugt:
die Analysevorrichtung weiter ein Probengefäß (23) umfasst, das die Probe (2) beinhaltet, und einen Deckel (24) hat, um die Probe (2) von einer Außenatmosphäre abzuschirmen, und
wobei die Düse (22) fähig ist, den Deckel (24) zu durchdringen.

10. Analysevorrichtung (1) nach Anspruch 9, wobei der Vorverarbeitungsschritt (S1aS1d) einen Verdünnungsschritt zum Verdünnen der Probe (2) mit einem Verdünnungsmittel in einem Verdünnungsgefäß (25) enthält, und
die Probe (2) und das Verdünnungsmittel dadurch gerührt werden, dass sie zwischen der Düse (22) und dem Verdünnungsgefäß (25) angezogen und ausgestoßen werden.

11. Analysevorrichtung (1) nach Anspruch 10, wobei der Trennungsschritt (S21a-S21d) Elektrophorese verwendet, und
eine Elektrophoreseflüssigkeit (L1) zur Verwendung in der Elektrophorese als das Verdünnungsmittel fungiert.

12. Analysevorrichtung (1) nach Anspruch 4 oder 11, wobei jeder der Trennungskanäle (30a-30d) ein Paar von Elektroden (33a-33d; 34a-34d) enthält, wobei jede Elektrode an einer Position näher an einem Ende des Trennungskanals bereitgestellt ist,
eine gemeinsam benutzte Stromquelleneinheit (72), die konfiguriert ist, eine Spannung anzulegen, die Elektrophorese in jedem der Trennungskanäle (30a-30d) bewirken kann, und ein Schalter (73a-73d), mit dem das Paar von Elektroden (33a-33d; 34a-34d) eines der Vielzahl von Trennungskanälen (30a-30d) elektrisch mit der Stromquelleneinheit (72) verbunden werden soll, der ausgewählt werden kann, bereitgestellt sind, und
die Steuereinheit (71) konfiguriert ist, den Schaltbetrieb des Schalters (73a-73d) zu steuern;
wobei bevorzugt die Stromquelleneinheit (72) fähig ist, die Polarität der Spannung umzuschalten, die an jeden der Trennungskanäle (30a-30d) angelegt wird.

13. Analysevorrichtung (1) nach einem der vorstehenden Ansprüche, wobei, wenn der Analyseschritt (S2a-S2d) in zwei oder mehr der Trennungskanäle (30a-30d) unter Verwendung derselben Probe ausgeführt wird, die Steuereinheit (71) konfiguriert ist, analytische Ergebnisse zu mitteln, die in den Trennungskanälen (30a-30d) erhalten werden;
wobei bevorzugt die Steuereinheit (71) konfiguriert ist, den Mittelungsprozess durch Ausschließen eines analytischen Ergebnisses auszuführen, das ermittelt ist, unter den analytischen Ergebnissen anomal zu sein, die in den zwei oder mehr der Trennungskanäle (30a-30d) erhalten werden.

14. Analysevorrichtung (1) nach einem der vorstehenden Ansprüche, wobei die Steuereinheit (71) konfiguriert ist, einen Korrelationsberechnungsprozess unter Verwendung eines Korrekturkoeffizientensatzes für jeden der Trennungskanäle (30a-30d) an den analytischen Ergebnissen auszuführen.

15. Analyseverfahren, umfassend:
einen Analyseschritt (S1a-S1d), der einen Trennungsschritt (S21a-S21d) zum Trennen einer bestimmten Komponente, die in einer Probe beinhaltet ist, die in eine Vielzahl von Trennungskanälen eingeleitet wird, und einen Erfassungsschritt (S22a-S22d) zum Erfassen der getrennten bestimmten Komponente unter Verwendung eines Detektors enthält; und
einen Vorverarbeitungsschritt (S1a-S1d) zum Versetzen jedes der Trennungskanäle in einen Zustand, in dem er den Analyseschritt (S1a-S1d) ausführen kann,
wobei mindestens Teile der Vorverarbeitungsschritte (S11a-S13a, S11b-S13b, S11c-S13c, S11d-S13d) von mindestens zwei der Vielzahl von Trennungskanälen (30a-30d) zeitgleich durchgeführt werden, und
wobei Startzeiten der Vorverarbeitungsschritte (S1a-S1d), die in der Vielzahl von Trennungskanälen (30a-30d) ausgeführt werden, auf unterschiedliche Zeiten eingestellt sind.

16. Analyseverfahren nach Anspruch 15, wobei der Vorverarbeitungsschritt (S1a-S1d) einen Reinigungsschritt zum Reinigen des jeweiligen Trennungskanals enthält.

17. Analyseverfahren nach Anspruch 16, wobei die Vielzahl von Trennungskanälen mit einem Reinigungsflüssigkeitsbehälter, der eine Reinigungsflüssigkeit zur Verwendung im Reinigungsschritt speichert, über einen verzweigten Kanal verbunden sind, und
die Reinigungsflüssigkeit aus dem Reinigungsbehälter selektiv in irgendeinen der Vielzahl von Trennungskanälen gegossen wird;
wobei bevorzugt der verzweigte Kanal mit einem Schaltventil zum Schalten des Flusses der Reinigungsflüssigkeit vom Reinigungsflüssigkeitsbehälter zu irgendeinem der Vielzahl von Trennungskanälen bereitgestellt ist.

18. Analyseverfahren nach einem der Ansprüche 15, 16 oder 17, wobei der Trennungsschritt Elektrophorese verwendet und wobei
ein Elektrophoreseflüssigkeitsbehälter zum Speichern einer Elektrophoreseflüssigkeit zur Verwendung in der Elektrophorese mit einer stromaufwärts liegenden Seite des Schaltventils verbunden ist und
die Reinigungsflüssigkeit oder die Elektrophoreseflüssigkeit durch den Schaltbetrieb des Schaltventils selektiv in irgendeinen der Vielzahl von Trennungskanälen eingeleitet wird.

19. Analyseverfahren nach Anspruch 18, wobei der Vorverarbeitungsschritt (S1a-S1d) weiter einen Füllungsschritt (S12a-S12d) zum Füllen des gereinigten Trennungskanals mit der Elektrophoreseflüssigkeit (L1) enthält.

20. Analyseverfahren nach einem der Ansprüche 15 bis 19, wobei Startzeiten der Analyseschritte, die in der Vielzahl von Trennungskanälen ausgeführt werden, auf unterschiedliche Zeiten eingestellt sind.

21. Analyseverfahren nach einem der Ansprüche 15 bis 20, wobei der Detektor (40) eine Vielzahl von Erfassungseinheiten (41a-41d) umfasst, die bei jedem der Trennungskanäle (30a-30d) bereitgestellt sind;
wobei bevorzugt:
jede der Erfassungseinheiten (41a-41d) eine Erfassung an einer Position ausführt, die vom Mittelpunkt hin zu einem Ende des entsprechenden der Trennungskanäle (30a-30d) verschoben ist, und
die Probe (2) von einem der Enden davon in den Trennungskanal eingeleitet werden kann.

22. Analyseverfahren nach einem der Ansprüche 15 bis 21, wobei ein Druckgenerator (59) zum Anlegen eines Drucks, der eine Flüssigkeit ausstoßen kann, die jeden der Trennungskanäle (30a-30d) füllt, mit der Vielzahl von Trennungskanälen (30a-30d) verbunden ist;
wobei bevorzugt ein Verteiler (57) zum Ausgleichen des Drucks, der auf die Vielzahl von Trennungskanälen (30a-30d) angelegt wird, zwischen der Vielzahl von Trennungskanälen (30a-30d) und dem Druckgenerator (59) bereitgestellt ist.

23. Analyseverfahren nach einem der Ansprüche 15, 16 oder 17, wobei der Vorverarbeitungsschritt (S1a-S1d) weiter einen Abgabeschritt (S13a-S13d) zum Abgeben der Probe unter Verwendung eines Spenders mit einer Düse in den Trennungskanal enthält;
wobei bevorzugt die Probe durch Veranlassen der Düse, einen Deckel zum Abschirmen der Probe von einer Außenatmosphäre, der in einem Probengefäß, das die Probe beinhaltet, bereitgestellt ist, zu durchdringen, in den Spender gesaugt wird.

24. Analyseverfahren nach Anspruch 23, wobei der Vorverarbeitungsschritt (S1a-S1d) einen Verdünnungsschritt zum Verdünnen der Probe (2) mit einem Verdünnungsmittel in einem Verdünnungsgefäß (25) enthält, und
die Probe (2) und das Verdünnungsmittel dadurch gerührt werden, dass sie zwischen der Düse (22) und dem Verdünnungsgefäß (25) angezogen und ausgestoßen werden.

25. Analyseverfahren nach Anspruch 24, wobei der Trennungsschritt (S21a-S21d) Elektrophorese verwendet, und
eine Elektrophoreseflüssigkeit (L1) zur Verwendung in der Elektrophorese als das Verdünnungsmittel fungiert.

26. Analyseverfahren nach einem der Ansprüche 18 bis 25, wobei jeder der Trennungskanäle ein Paar von Elektroden enthält, wobei jede Elektrode an einer Position näher an einem Ende des Trennungskanals bereitgestellt ist, und
eine Spannung, die Elektrophorese bewirken kann, selektiv an das Paar von Elektroden jedes der Trennungskanäle durch Umschalten des Schalters der gemeinsam benutzten Stromquelleneinheit angelegt wird;
vorzugsweise wobei die Stromquelleneinheit in der Lage ist, die Polarität der an jeden der Trennkanäle angelegten Spannung zu ändern.

27. Analysevorrichtung (1) nach einem der Ansprüche 11 oder 12, oder das Analyseverfahren nach einem der Ansprüche 25 oder 26, wobei jeder der Trennungskanäle (30a-30d) einen kreisförmigen Querschnitt mit einem Durchmesser von 25 bis 100 µm oder einen rechtwinkligen Querschnitt mit einer Seite, die 25 bis 100 µm misst, hat.

28. Analyseverfahren nach einem der Ansprüche 15 bis 26, wobei die Probe (2) Hämoglobin beinhaltet;
wobei bevorzugt die Probe (2) Blut ist.

29. Analyseverfahren nach einem der Ansprüche 17 bis 26 oder 28, wobei, wenn der Analyseschritt (S2a-S2d) in zwei oder mehr der Trennungskanäle unter Verwendung derselben Probe ausgeführt wird, analytische Ergebnisse, die in den Trennungskanälen erhalten werden, gemittelt werden;
wobei bevorzugt der Mittelungsprozess durch Ausschließen eines analytischen Ergebnisses ausgeführt wird, das ermittelt ist, unter den analytischen Ergebnissen anomal zu sein, die in den zwei oder mehr der Trennungskanäle (30a-30d) erhalten werden.

30. Analyseverfahren nach einem der Ansprüche 17 bis 26, 28 oder 29, wobei ein Korrekturberechnungsprozess unter Verwendung eines Korrekturkoeffizientensatzes für jeden der Trennungskanäle an den analytischen Ergebnissen ausgeführt wird.

## Revendications

1. Appareil d'analyse (1) comprenant :
une pluralité de canaux de séparation (30a-30d) pour séparer un composant particulier contenu dans un échantillon (2) ;
un détecteur (40) pour détecter le composant particulier séparé ; et
une unité de commande (71) configurée pour commander une étape d'analyse (S2a-S2d) et une étape de prétraitement (S1a-S1d), l'étape d'analyse (S2a-S2d) incluant une étape de séparation (S21a-S21d) consistant à effectuer la séparation du composant particulier et une étape de détection (S22a-S22d) consistant à effectuer la détection dans chacun des canaux de séparation (30a-30d), l'étape de prétraitement étant configurée pour placer chacun des canaux de séparation (30a-30d) dans un état dans lequel il peut effectuer l'étape d'analyse (S2a-S2d),
dans lequel l'unité de commande (71) est configurée pour exécuter simultanément au moins des parties des étapes de prétraitement (S11a-S13a, S11b-S13b, S11c-S13c, S11d-s13d) d'au moins deux de la pluralité de canaux de séparation (30a-30d), et
dans lequel l'unité de commande (71) est configurée pour régler des instants de début des étapes de pré-traitement (S1a-S1d) effectuées dans la pluralité de canaux de séparation (30a-30d) à des instants différents.

2. Appareil d'analyse (1) selon la revendication 1, dans lequel l'étape de prétraitement (S1a-S1d) inclut une étape de nettoyage (S11a-S11d) consistant à nettoyer le canal de séparation respectif.

3. Appareil d'analyse (1) selon la revendication 2, comprenant en outre un réservoir de liquide de nettoyage (13) stockant un liquide de nettoyage (L3) destiné à être utilisé dans l'étape de nettoyage (S11a-S11d),
dans lequel la pluralité de canaux de séparation (30a-30d) sont reliés au réservoir de liquide de nettoyage (13) par un canal ramifié (66), et
l'unité de commande (71) est configurée pour commander l'écoulement du liquide de nettoyage (L3) du réservoir de liquide de nettoyage (13) vers l'un quelconque de la pluralité de canaux de séparation (30a-30d) ;
de préférence dans lequel :
le canal ramifié (66) est pourvu d'une vanne de commutation (55a-55d) pour commuter l'écoulement du liquide de nettoyage (L3) du réservoir de liquide de nettoyage (13) vers l'un quelconque de la pluralité de canaux de séparation (30a-30d), et
l'unité de commande (71) est configurée pour commander l'opération de commutation de la vanne de commutation (55a-55d).

4. Appareil d'analyse (1) selon la revendication 3, dans lequel l'étape de séparation (S21a-S21d) utilise une électrophorèse,
un réservoir de liquide d'électrophorèse (11) stockant un liquide d'électrophorèse (L1) destiné à être utilisé dans l'électrophorèse est connecté du côté amont de la vanne de commutation (55a-55d), et
l'unité de commande (71) est configurée pour introduire sélectivement le liquide de nettoyage (L3) ou le liquide d'électrophorèse (L1) dans l'un quelconque de la pluralité de canaux de séparation (30a-30d) par l'opération de commutation de la vanne de commutation (55a-55d).

5. Appareil d'analyse (1) selon la revendication 4, dans lequel l'étape de prétraitement (S1a-S1d) inclut en outre une étape de remplissage (S12a-S12d) consistant à remplir le canal de séparation nettoyé avec le liquide d'électrophorèse (L1).

6. Appareil d'analyse (1) selon l'une quelconque des revendications précédentes, dans lequel l'unité de commande (71) est configurée pour régler des instants de début des étapes d'analyse (S2a-S2d) effectuées dans la pluralité de canaux de séparation (30a-30d) à des instants différents.

7. Appareil d'analyse (1) selon l'une quelconque des revendications précédentes, dans lequel le détecteur (40) comprend une pluralité d'unités de détection (41a-41d) prévues au niveau de chacun des canaux de séparation (30a-30d) ;
de préférence dans lequel :
chacune des unités de détection (41a-41d) est configurée pour effectuer une détection dans une position décalée du centre vers l'une ou l'autre des extrémités de l'un correspondant des canaux de séparation (30a-30d), et
l'échantillon (2) peut être introduit dans le canal de séparation à partir de l'une ou l'autre de ses extrémités.

8. Appareil d'analyse (1) selon l'une quelconque des revendications précédentes, dans lequel un générateur de pression (59) destiné à appliquer une pression qui peut décharger un liquide remplissant chacun des canaux de séparation (30a-30d) est connecté à la pluralité de canaux de séparation (30a-30d) ;
de préférence dans lequel un collecteur (57) pour égaliser la pression appliquée à la pluralité de canaux de séparation (30a-30d) est prévu entre la pluralité de canaux de séparation (30a-30d) et le générateur de pression (59).

9. Appareil d'analyse (1) selon l'une quelconque des revendications 1, 2 ou 3, comprenant en outre un distributeur (20) comportant une buse (22) pour distribuer l'échantillon (2) à chacun des canaux de séparation (30a-30d).
dans lequel l'étape de prétraitement (S1a-S1d) inclut en outre une étape de distribution (S13a-S13d) consistant à distribuer l'échantillon (2) dans le canal de séparation ;
de préférence dans lequel :
l'appareil d'analyse comprend en outre un récipient d'échantillon (23) qui contient l'échantillon (2) et comporte un couvercle (24) pour protéger l'échantillon (2) d'une atmosphère externe, et
dans lequel la buse (22) est capable de pénétrer dans le couvercle (24).

10. Appareil d'analyse (1) selon la revendication 9, dans lequel l'étape de prétraitement (S1a-S1d) inclut une étape de dilution consistant à diluer l'échantillon (2) avec un diluant dans un récipient de dilution (25), et
l'échantillon (2) et le diluant sont agités par aspiration et évacuation entre la buse (22) et le récipient de dilution (25).

11. Appareil d'analyse (1) selon la revendication 10, dans lequel l'étape de séparation (S21a-S21d) utilise une électrophorèse, et
un liquide d'électrophorèse (L1) destiné à être utilisé dans l'électrophorèse sert de diluant.

12. Appareil d'analyse (1) selon la revendication 4 ou 11, dans lequel chacun des canaux de séparation (30a-30d) inclut une paire d'électrodes (33a-33d ; 34a-34d), chaque électrode étant prévue au niveau d'une position plus proche d'une extrémité du canal de séparation,
une unité de source d'alimentation partagée (72) qui est configurée pour appliquer une tension qui peut provoquer une électrophorèse dans chacun des canaux de séparation (30a-30d) et un commutateur (73a-73d), avec lequel la paire d'électrodes (33a-33d ; 34a-34d) de n'importe lequel de la pluralité de canaux de séparation (30a-30d) devant être connectés électriquement à l'unité de source d'alimentation (72) peut être sélectionnée, sont fournis, et
l'unité de commande (71) est configurée pour commander l'opération de commutation du commutateur (73a-73d) ;
de préférence dans lequel l'unité de source d'alimentation (72) est capable de commuter la polarité de la tension appliquée à chacun des canaux de séparation (30a-30d).

13. Appareil d'analyse (1) selon l'une quelconque des revendications précédentes, dans lequel, lorsque l'étape d'analyse (S2a-S2d) est effectuée dans deux ou plus de deux des canaux de séparation (30a-30d) en utilisant le même échantillon, l'unité de commande (71) est configurée pour calculer la moyenne de résultats d'analyse obtenus dans les canaux de séparation (30a-30d) ;
de préférence dans lequel l'unité de commande (71) est configurée pour effectuer le processus de calcul de moyenne en excluant un résultat analytique déterminé comme étant anormal des résultats analytiques obtenus dans les deux ou plus de deux canaux de séparation (30a-30d).

14. Appareil d'analyse (1) selon l'une quelconque des revendications précédentes, dans lequel l'unité de commande (71) est configurée pour effectuer un processus de calcul de correction sur les résultats d'analyse en utilisant un coefficient de correction réglé pour chacun des canaux de séparation (30a-30d).

15. Procédé d'analyse, comprenant :
une étape d'analyse (S1a-S1d) qui inclut une étape de séparation (S21a-S21d) consistant à séparer un composant particulier contenu dans un échantillon introduit dans une pluralité de canaux de séparation et une étape de détection (S22a-S22d) consistant à détecter le composant particulier séparé à l'aide d'un détecteur ; et
une étape de prétraitement (S1a-S1d) consistant à placer chacun des canaux de séparation dans un état dans lequel il peut effectuer l'étape d'analyse (S1a-S1d),
dans lequel au moins des parties des étapes de prétraitement (S11a-S13a, S11b-S13b, S11c-S13c, S11d-S13d) d'au moins deux de la pluralité de canaux de séparation (30a-30d) sont effectuées simultanément, et
dans lequel des instants de début des étapes de prétraitement (S1a-S1d) effectuées dans la pluralité de canaux de séparation (30a-30d) sont réglés à des instants différents.

16. Procédé d'analyse selon la revendication 15, dans lequel l'étape de prétraitement (S1a-S1d) inclut une étape de nettoyage consistant à nettoyer le canal de séparation respectif.

17. Procédé d'analyse selon la revendication 16, dans lequel la pluralité de canaux de séparation sont connectés à un réservoir de liquide de nettoyage stockant un liquide de nettoyage destiné à être utilisé dans l'étape de nettoyage via un canal ramifié, et
le liquide de nettoyage est versé sélectivement dans l'un quelconque de la pluralité de canaux de séparation à partir du réservoir de liquide de nettoyage ;
de préférence dans lequel le canal ramifié est pourvu d'une vanne de commutation pour commuter l'écoulement du liquide de nettoyage du réservoir de liquide de nettoyage vers l'un quelconque de la pluralité de canaux de séparation.

18. Procédé d'analyse selon l'une quelconque des revendications 15, 16 ou 17, dans lequel l'étape de séparation utilise une électrophorèse, et dans lequel
un réservoir de liquide d'électrophorèse stockant un liquide d'électrophorèse destiné à être utilisé dans l'électrophorèse est connecté du côté amont de la vanne de commutation, et
le liquide de nettoyage ou le liquide d'électrophorèse est introduit sélectivement dans l'un quelconque de la pluralité de canaux de séparation par l'opération de commutation de la vanne de commutation.

19. Procédé d'analyse selon la revendication 18, dans lequel
l'étape de prétraitement (S1a-S1d) inclut en outre une étape de remplissage (S12a-S12d) consistant à remplir le canal de séparation nettoyé au liquide d'électrophorèse (L1).

20. Procédé d'analyse selon l'une quelconque des revendications 15 à 19, dans lequel des instants de début des étapes d'analyse effectuées dans la pluralité de canaux de séparation sont réglés à des instants différents.

21. Procédé d'analyse selon l'une quelconque des revendications 15 à 20, dans lequel le détecteur (40) comprend une pluralité d'unités de détection (41a-41d) prévues au niveau de chacun des canaux de séparation (30a-30d) ;
de préférence dans lequel :
chacune des unités de détection (41a-41d) effectue une détection au niveau d'une position décalée du centre vers l'une ou l'autre des extrémités de l'un correspondant des canaux de séparation (30a-30d), et
l'échantillon (2) peut être introduit dans le canal de séparation à partir de l'une ou l'autre de ses extrémités.

22. Procédé d'analyse selon l'une quelconque des revendications 15 à 21, dans lequel un générateur de pression (59) permettant d'appliquer une pression qui peut décharger un liquide remplissant chacun des canaux de séparation (30a-30d) est connecté à la pluralité de canaux de séparation (30a-30d) ;
de préférence dans lequel un collecteur (57) pour égaliser la pression appliquée à la pluralité de canaux de séparation (30a-30d) est prévu entre la pluralité de canaux de séparation (30a-30d) et le générateur de pression (59).

23. Procédé d'analyse selon l'une quelconque des revendications 15, 16 ou 17, dans lequel l'étape de prétraitement (S1a-S1d) inclut en outre une étape de distribution (S13a-S13d) consistant à distribuer l'échantillon dans le canal de séparation en utilisant un distributeur ayant une buse ;
de préférence dans lequel l'échantillon est aspiré dans le distributeur en amenant la buse à pénétrer dans un couvercle pour protéger l'échantillon d'une atmosphère externe fournie dans un récipient d'échantillon contenant l'échantillon.

24. Procédé d'analyse selon la revendication 23, dans lequel l'étape de prétraitement (S1a-S1d) inclut une étape de dilution consistant à diluer l'échantillon (2) avec un diluant dans un récipient de dilution (25), et
l'échantillon (2) et le diluant sont agités par aspiration et évacuation entre la buse (22) et le récipient de dilution (25).

25. Procédé d'analyse selon la revendication 24, dans lequel l'étape de séparation (S21a-S21d) utilise une électrophorèse, et
un liquide d'électrophorèse (L1) destiné à être utilisé dans l'électrophorèse sert de diluant.

26. Procédé d'analyse selon l'une quelconque des revendications 18 à 25, dans lequel chacun des canaux de séparation inclut une paire d'électrodes, chaque électrode étant prévue au niveau d'une position plus proche d'une extrémité du canal de séparation, et
une tension qui peut causer une électrophorèse est appliquée sélectivement à la paire d'électrodes de chacun des canaux de séparation en commutant le commutateur de l'unité de source d'alimentation partagée ;
de préférence dans lequel l'unité de source d'alimentation est capable de commuter la polarité de la tension appliquée à chacun des canaux de séparation.

27. Appareil d'analyse (1) selon les revendications 11 ou 12, ou procédé d'analyse selon les revendications 25 ou 26, où chacun des canaux de séparation (30a-30d) a une section transversale circulaire de 25 à 100 µm de diamètre ou une section rectangulaire avec un côté mesurant de 25 à 100 µm.

28. Procédé d'analyse selon l'une quelconque des revendications 15 à 26, dans lequel l'échantillon (2) contient de l'hémoglobine ;
de préférence dans lequel l'échantillon (2) est du sang.

29. Procédé d'analyse selon l'une quelconque des revendications 17 à 26 ou 28, dans lequel, lorsque l'étape d'analyse (S2a-S2d) est effectuée dans deux ou plus de deux des canaux de séparation en utilisant le même échantillon, la moyenne des résultats d'analyse obtenus dans les canaux de séparation est calculée ;
de préférence dans lequel le processus de calcul de moyenne est effectué en excluant un résultat d'analyse déterminé comme étant anormal des résultats d'analyse obtenus dans les deux ou plus de deux canaux de séparation.

30. Procédé d'analyse selon l'une quelconque des revendications 17 à 26, 28 ou 29, dans lequel un processus de calcul de correction est effectué sur les résultats d'analyse en utilisant un coefficient de correction réglé pour chacun des canaux de séparation.
